Europäisches Patentamt

European Patent Office

Office européen des brevets

(11) Veröffentlichungsnummer: **0 099 472**
**B1**

(12) **EUROPÄISCHE PATENTSCHRIFT**

(45) Veröffentlichungstag der Patentschrift:
10.04.85

(51) Int. Cl.⁴: **B 01 D 27/08**

(21) Anmeldenummer: 83105917.5

(22) Anmeldetag: 16.06.83

(54) **Flüssigkeitsfilter.**

(30) Priorität: 17.07.82 DE 3226808

(43) Veröffentlichungstag der Anmeldung:
01.02.84 Patentblatt 84/5

(45) Bekanntmachung des Hinweises auf die Patenterteilung:
10.04.85 Patentblatt 85/15

(84) Benannte Vertragsstaaten:
DE FR GB IT

(56) Entgegenhaltungen:
DE - A - 2 547 857
DE - A - 2 902 537
FR - A - 2 328 499

(73) Patentinhaber: ROBERT BOSCH GMBH, Postfach 50,
D-7000 Stuttgart 1 (DE)

(72) Erfinder: Müller, Willi, Wiesenstrasse 38, D-7247 Sulz
(DE)
Erfinder: Schacht, Hans, Leharstrasse 12,
D-7000 Stuttgart 1 (DE)
Erfinder: Scholten, Werner, Dieterlestrasse 66,
D-7000 Stuttgart 30 (DE)
Erfinder: Scholz, Erich, Adenauerstrasse 34,
D-7303 Neuhausen (DE)

## Beschreibung

Die Erfindung geht aus von einem Flüssigkeitsfilter nach der Gattung des Hauptanspruchs. Es ist schon ein solches Filter aus der DE-A Nr. 2902537 bekannt, bei dem ein axial durchströmter Filtereinsatz in das becherförmige Gehäuseteil eines Leitungsfilters eingesetzt ist und eine ringförmige Dichtstelle zwischen Aussenumfang des Filtereinsatzes und Gehäuseinnenwand Schmutz- und Reinseite voneinander trennt. Eine Stirnseite des Filtereinsatzes liegt hier unmittelbar einem Deckel gegenüber, der am Rand des becherförmigen Gehäuseteils eingebördelt ist und mit einer axial verlaufenden Schulter eine klebstoffgefüllte Kammer einschliesst, um so eine besonders dichte und strapazierfähige Verbindung zwischen Deckel und Gehäuseteil zu bekommen. Es kann nun vorkommen, dass bei besonders rauhem Betrieb und bei Verwendung von aggressiven Kraftstoffen, wie z.B. Methanol, diese Dichtstellen den ständig steigenden Anforderungen nicht immer voll gerecht werden. Insbesondere kann aggressiver Kraftstoff die Dichtstelle zwischen Schmutz- und Reinseite angreifen und zu einem vorzeitigen Auftreten undichter Stellen führen. Bei bestimmten Anwendungsfällen kann es von Nachteil sein, dass die in einem Anschluss des Leitungsfilters ankommenden Schwingungen im Kraftstoff unmittelbar auf den Filtereinsatz wirken und dessen Arbeitsweise nachteilig beeinflussen können. Zudem baut der Deckel in axialer Richtung des Leitungsfilters durch die Kammerbildung für den Klebstoff relativ lang.

Ferner ist aus der DE-U Nr. 7729510 ein als Leitungsfilter ausgebildetes Kraftstoffilter bekannt, bei dem an einer Stirnseite eines axial durchströmten Filtereinsatzes eine Abdeckscheibe anliegt. Die Abdeckscheibe liegt in einigem Abstand von einem Deckel und ragt mit ihrem äusseren, umgebogenen Rand in eine Dichtstelle, die Schmutz- und Reinseite voneinander trennt. Die Abdeckscheibe hat hier vor allem die Funktion, ein flaches Faservlieselement an der Stirnseite des als Wickel ausgebildeten Filtereinsatzes zu halten. Auch hier kann aggressiver Kraftstoff die Dichtstelle zwischen Aussenwand des Filtereinsatzes und Innenwand des Gehäuses leicht angreifen. Eine Dämpfung von Flüssigkeitsschwingungen in der Kammer zwischen dem Deckel und der Abdeckscheibe ist hier nicht erwähnt.

*Vorteile der Erfindung*

Das erfindungsgemässe Flüssigkeitsfilter mit den kennzeichnenden Merkmalen des Hauptanspruchs hat demgegenüber den Vorteil, dass es bei kompakter und einfacher Bauweise ein besonders hohes Mass an Dichtheit zwischen Schmutz- und Reinseite bietet und darüber hinaus noch ankommende Flüssigkeitsschwingungen dämpft. Die Abstandsscheibe, die auch die dämpfende Kammer begrenzt, bildet mit der Gehäuseinnenwand einen relativ langen und dünnen Ringspalt zur Kammerung des Heissschmelzklebers, so dass dessen Angriffsflächen für den Kraftstoff verhältnismässig klein werden, wodurch sich die Lebensdauer des Filters erhöht. Diese Dichtstelle ist daher besonders widerstandsfähig auch gegen rauhen Betrieb und aggressive Kraftstoffe wie Methanol. Zudem begünstigt die Bauart der Abstandsscheibe eine einfache und leichte Montage des Filters.

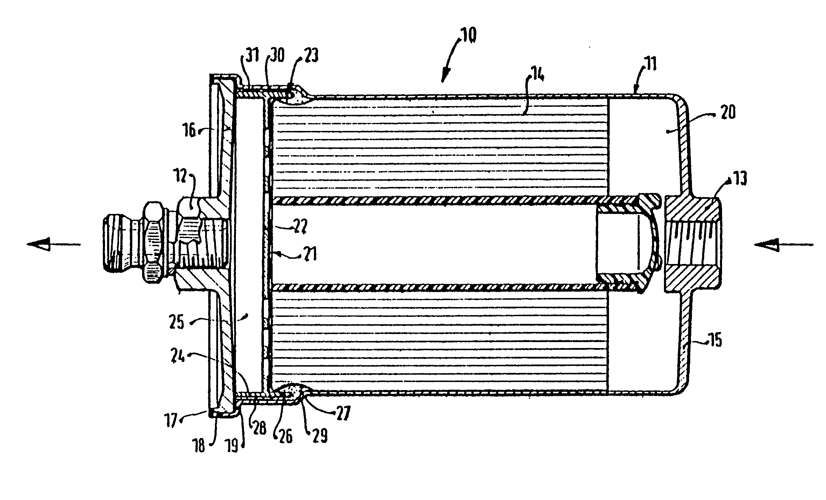

Durch die in den Unteransprüchen aufgeführten Massnahmen sind vorteilhafte Weiterbildungen und Verbesserungen des im Hauptanspruch angegebenen Flüssigkeitsfilters möglich. Eine Ausbildung gemäss Anspruch 2 begünstigt besonders eine platzsparende Bauart. Zudem erhöht die Schweissverbindung von Deckel und Gehäuseteil die Dauerfestigkeit und führt zu einer höheren Sicherheit beim Zusammenpressen des Flüssigkeitsfilters während eines Autounfalls. Weitere vorteilhafte Ausgestaltungen ergeben sich aus den übrigen Ansprüchen, der Beschreibung sowie der Zeichnung.

*Zeichnung*

Ein Ausführungsbeispiel der Erfindung ist in der Zeichnung dargestellt und in der nachfolgenden Beschreibung näher erläutert. Die einzige Figur zeigt einen Längsschnitt durch ein Flüssigkeitsfilter.

*Beschreibung des Ausführungsbeispieles*

Die Figur zeigt ein Flüssigkeitsfilter 10, das als Leitungsfilter ausgebildet ist und in einem metallischen Gehäuse 11 mit zwei Anschlüssen 12, 13 für Einlass und Auslass einen axial durchströmten, als Wickel ausgebildeten Filtereinsatz 14 aufnimmt. Das Gehäuse 11 besteht aus einem im wesentlichen becherförmigen Gehäuseteil 15 und einem Deckel 16, die beide als Fliesspressteile ausgebildet sind und an ihren Rändern 17 miteinander dicht verschweisst sind.

Der Deckel 16 ist als relativ ebenes Bauteil ausgebildet. Er ist mit seinem Aussenumfang in einem aufgeweiteten Endabschnitt 18 des Gehäuseteils 15 geführt und liegt mit seiner dem Filtereinsatz 14 zugewandten Seite an einer ersten Schulter 19 im Gehäuseteil 15 an. Die nach aussen ragenden Ränder 17 von Deckel 16 und Endabschnitt 18 sind dicht und fest durch die Schweissnaht miteinander verbunden, die somit möglichst weit entfernt von einer Dichtstelle im Gehäuseinneren liegt.

Im Innern des Gehäuses 11 ist eine Abstandsscheibe 21 angeordnet, die zwischen dem Deckel 16 und der zugewandten Stirnseite des Filtereinsatzes 14 liegt. Der Filtereinsatz 14 begrenzt im Gehäuse 11 einen Raum 20, der mit dem Anschluss 13 verbunden ist. Die Abstandsscheibe 21 ist einstückig und als Fliesspressteil ausgebildet und hat im Querschnitt im wesentlichen die Form eines Doppel-T-Trägers, dessen Steg eine Lochscheibe 22 und dessen Gurte einen zylindrischen Rohrabschnitt 23 bilden. Der zum Deckel 16 hin gewandte erste Teil 24 des Rohrabschnitts 23 stützt sich am Deckel 16 ab, so dass Deckel 16 und Abstandsscheibe 21 eine Kammer 25 begrenzen, in der ankommende Flüssigkeitsschwingungen gedämpft werden. Mit seinem anderen, zweiten Teil 26 des Rohrabschnitts 23 umfasst die Abstandsscheibe 21 den Filtereinsatz 14 an seinem stirnseitigen Ende und ragt in eine Dichtstelle 27 hinein, welche im Innern des Gehäuses 11 die Schmutz- von der Reinseite trennt. Zu diesem Zweck sind die Innendurchmesser vom zweiten Teil 26 des Rohrabschnitts 23 und vom Gehäuseteil 15 im Bereich des Filterelements 14 gleich gross ausgebildet. Ferner ist eine Randzone 28 des Gehäuseteils 15 im Bereich zwischen der ersten Schulter 19 und einer bei der Dichtstelle 27 liegenden, zweiten Schulter 29 entsprechend aufgeweitet. Die Länge dieser Randzone 28 entspricht im wesentlichen der Länge des Rohrabschnitts 23 in axialer Richtung. Die Abstandsscheibe 21 ist über Nocken 30 in der Randzone 28 so zentriert, dass zwischen dem Aussendurchmesser des Rohrabschnitts 23 und der Innenwand der Randzone 28 ein gleichmässig dicker, relativ langer Ringspalt 31 ausgebildet ist. Der gesamte Ringspalt 31 ist bis zur Dichtstelle 27 hin mit einem Heissschmelzkleber gefüllt, so dass Filtereinsatz 14 und Abstandsscheibe 21 dicht und fest im Gehäuseteil 15 angeordnet sind.

Bei der Herstellung des Filters 10 kann der Filtereinsatz 14 mit aufgesetzter Abstandsscheibe 21 unter entsprechender Beifügung von Heissschmelzkleber relativ leicht in das noch offene Gehäuseteil 11 eingebaut werden und nach dem Einsetzen des Deckels 16 können die Ränder von Gehäuseteil 11 und Deckel 16 dicht verschweisst werden.

Die Wirkungsweise des Flüssigkeitsfilters 10 wird wie folgt erläutert: Der am Anschluss 13 zuströmende Kraftstoff gelangt zuerst in den Raum 20 und in den Filtereinsatz 14. In ihm durchdringt der Kraftstoff das Filterpapier, fliesst durch die gelochte Abstandsscheibe 21 in die Kammer 25 und tritt am Anschluss 13 gereinigt aus. Im Filter 10 ankommende Flüssigkeitsschwingungen können nun nicht mehr ungedämpft auf nachgeschaltete Aggregate wirken, sondern werden in der Kammer 25 ganz erheblich geschwächt. Der im Ringspalt 31 gekammerte Heissschmelzkleber ist gegenüber aggressiven Kraftstoffen sehr geschützt, da er nur relativ kleine Angriffsflächen bietet. Die Schmutz- und Reinseite voneinander trennende Dichtstelle 27 hält somit auch einem rauhen Betrieb bei derartigen Kraftstoffen lange Zeit stand. Begünstigt wird dies auch dadurch, dass der Filtereinsatz 14 über die Abstandsscheibe 21 sich am Deckel 16 abstützt. Durch die flache Bauweise des Deckels 16 in Verbindung mit der Form der Abstandsscheibe 21 ergibt sich somit ein kompakt bauender Filter 10, der nicht nur hohe Dichtheitsforderungen erfüllt, sondern auch ankommende Flüssigkeitsschwingungen dämpfen kann. Die kompakte Bauweise des Filters 10 wird zusätzlich durch die Schweissverbindung zwischen Deckel und Gehäuseteil unterstützt, die neben einer besseren Dauerfestigkeit auch eine höhere Sicherheit beim Zusammenpressen des Filters 10 ergibt.

Selbstverständlich sind Änderungen an der gezeigten Ausführungsform möglich, ohne vom Gedanken der Erfindung abzuweichen. So kann die als Fliesspressteil ausgebildete Abstandsscheibe 21 auch eine solche Form aufweisen, dass sie aus einem tiefgezogenen Blech herstellbar ist und dabei im wesentlichen die Form eines Doppel-T-Trägers im Querschnitt aufweist.

**Patentansprüche**

1. Flüssigkeitsfilter, insbesondere Kraftstofffilter, mit einem metallischen Gehäuse (11), das aus einem einen Filtereinsatz (14) aufnehmenden, becherförmigen Gehäuseteil (15) und einem mit letzterem fest verbundenen, am offenen Ende des Gehäuseteils (15) angeordneten Deckel (16) besteht und mit einem axial durchströmten Filtereinsatz (14) im Gehäuse, an dessen entgegengesetzten Stirnseiten jeweils ein Anschluss (12, 13) für Einlass und Auslass ausgebildet sind sowie mit einer Schmutz- und Reinseite voneinander trennenden Dichtstelle zwischen Filtereinsatz und Gehäuseteil, dadurch gekennzeichnet, dass im Gehäuse (11) zwischen Filtereinsatz (14) und Deckel (16) eine gelochte Abstandsscheibe (21) angeordnet ist, die im Querschnitt im wesentlichen die Form eines Doppel-T-Trägers aufweist, der mit seinem die Gurte des Doppel-T-Trägers bildenden Rohrabschnitt (23) im Gehäuseteil (11) geführt ist und mit dem zum Filtereinsatz (14) hin ragenden Teil (26) des Rohrabschnitts (23) den Filtereinsatz (14) umfasst und in die Dichtstelle (27) hineinragt, während der zum Deckel (16) hin ragende Teil (24) des Rohrabschnitts (23) sich am Deckel (16) abstützt, der im wesentlichen eben ausgebildet ist und mit der Abstandsscheibe (21) eine Kammer (25) einschliesst.

2. Filter nach Anspruch 1, dadurch gekennzeichnet, dass der Deckel (16) mit dem Gehäuseteil (15) verschweisst ist.

3. Filter nach Anspruch 2, dadurch gekennzeichnet, dass der Deckel (16) an seiner vom Filtereinsatz (14) abgewandten Seite mit dem Gehäuseteil (15) verschweisst ist.

4. Filter nach einem der Ansprüche 1 bis 3, dadurch gekennzeichnet, dass das Gehäuseteil (15) im Bereich des Filtereinsatzes (14) und der Rohrabschnitt (23) der Abstandsscheibe (21) den gleichen Innendurchmesser aufweisen.

5. Filter nach Anspruch 4, dadurch gekennzeichnet, dass das Gehäuseteil (15) zwischen zwei Schultern (19, 29) eine aufgeweitete Randzone (28) aufweist, in der die Abstandsscheibe (21) angeordnet ist.

6. Filter nach einem der Ansprüche 1 bis 5, dadurch gekennzeichnet, dass der Rohrabschnitt (23) und das Gehäuseteil (15) einen zylindrischen, den Klebstoff kammernden Ringspalt (31) bilden, der sich von der Dichtstelle (27) bis zum Deckel (16) erstreckt.

7. Filter nach einem der Ansprüche 1 bis 6, dadurch gekennzeichnet, dass der Deckel (16) als schwingungsdämpfendes Bauteil ausgebildet ist.

8. Filter nach Anspruch 6, dadurch gekennzeichnet, dass am äusseren Umfang des Rohrabschnitts (23) die Abstandsscheibe (21) im Gehäuseteil (11) zentrierende Nocken (30) angeordnet sind.

9. Filter nach einem der Ansprüche 1 bis 8, dadurch gekennzeichnet, dass die Abstandsscheibe (21) als Fliesspressteil ausgebildet ist.

## Revendications

1. Filtre à liquide, et en particulier à carburant, avec un corps métallique (11) constitué par une partie (15) en pot contenant une cartouche filtrante (14) et par un couvercle (16) disposé sur l'extrémité ouverte de la partie (15) et solidaire de cette dernière, avec une cartouche filtrante (14) parcourue axialement dans le corps, dont les faces frontales opposées portent chacune un raccord (12, 13) d'entrée ou de sortie, et avec une zone d'étanchéité entre la cartouche filtrante et la partie du corps séparant le côté pollué du côté propre, ledit filtre étant caractérisé en ce qu'un disque d'écartement perforé (21) est disposé dans le corps (11), entre la cartouche filtrante (14) et le couvercle (16), et présente sensiblement en coupe la forme d'un double T dont les membrures forment un tronçon de tube (23) guidé dans la partie (11) du corps et dont la partie (26) en saillie vers la cartouche filtrante (14) entoure cette dernière et pénètre dans la zone d'étanchéité (27), tandis que la partie (24) du tronçon de tube (23) en saillie vers le couvercle (16) prend appui sur ce dernier, qui est pratiquement plan et délimite une chambre (25) avec le disque d'écartement 21.

2. Filtre selon la revendication 1, caractérisé en ce que le couvercle (16) est soudé avec la partie (15) du corps.

3. Filtre selon la revendication 2, caractérisé en ce que le côté du couvercle (16) opposé à la cartouche filtrante (14) est soudé avec la partie (15) du corps.

4. Filtre selon l'une des revendications 1 à 3, caractérisé en ce que la partie (15) du corps située au voisinage de la cartouche filtrante (14) et le tronçon de tube (23) du disque d'écartement (21) présentent le même diamètre intérieur.

5. Filtre selon la revendication 4, caractérisé en ce que la partie (15) du corps présente entre deux épaulements (19, 29) une zone marginale (28) élargie, dans laquelle est disposé le disque d'écartement (21).

6. Filtre selon l'une des revendications 1 à 5, caractérisé en ce que le tronçon de tube (23) et la partie (15) du corps forment une fente annulaire (31) cylindrique, contenant la colle et s'étendant de la zone d'étanchéité (27) au couvercle (16).

7. Filtre selon l'une des revendications 1 à 6, caractérisé en ce que le couvercle (16) est réalisé sous la forme d'une pièce amortissant les oscillations.

8. Filtre selon la revendication 6, caractérisé en ce que le disque d'écartement (21) porte, sur le rebord extérieur du tronçon de tube (23), des bossages (30) de centrage dans la partie (11) du corps.

9. Filtre selon l'une des revendications 1 à 8, caractérisé en ce que le disque d'écartement (21) est réalisé par extrusion.

## Claims

1. Liquid filter, especially a fuel filter, with a metal housing (11) which consists of a cup-shaped housing part (15) receiving a filter insert (14) and of a cover (16) connected firmly to and arranged at the open end of the housing part (15), and with a filter insert (14) through which the medium flows axially and which is located in the housing, on the opposite end faces of which there is respectively a connection (12, 13) for the inlet and outlet, as well as with a sealing point separating a dirty side and a clean side from one another and located between the filter insert and housing part, characterised in that there is arranged in the housing (11), between the filter insert (14) and cover (16), a perforated spacer disc (21) which has in cross-section essentially the form of a double-T girder which is guided in the housing part (11) by means of its tubular portion (23) forming the flanges of the double-T girder and which surrounds the filter insert (14), by means of that part (26) of the tubular portion (23) projecting towards the filter insert (14), and extends into the sealing point (27), whilst that part (24) of the tubular portion (23) projecting towards the cover (16) is supported on the cover (16) which is made essentially plane and which encloses, together with the spacer disc (21), a chamber (25).

2. Filter according to Claim 1, characterised in that the cover (16) is welded to the housing part (15).

3. Filter according to Caim 2, characterised in that the cover (16) is welded to the housing part (15) on its side facing away from the filter insert (14).

4. Filter according to one of Claims 1 to 3, characterised in that the housing part (15), in the region of the filter insert (14), and the tubular portion (23) of the spacer disc (21) have the same inside diameter.

5. Filter according to Claim 4, characterised in that the housing part (15) has between two shoulders (19, 29) an expanded edge zone (28) in which the spacer disc (21) is located.

6. Filter according to one of Claims 1 to 5, characterised in that the tubular portion (23) and the housing part (15) form a cylindrical annular gap (31) which accommodates the adhesive and which extends from the sealing point (27) to the cover (16).

7. Filter according to one of Claims 1 to 6, characterised in that the cover (16) is designed as a vibration-damping component.

8. Filter according to Claim 6, characterised in that projections (30) centering the spacer disc (21) in the housing part (11) are located on the outer periphery of the tubular portion (23).

9. Filter according to one of Claims 1 to 8, characterised in that the spacer disc (21) is designed as an extrusion moulding.